# EUROPÄISCHE PATENTSCHRIFT

(11) **EP 2 008 752 B1**
(45) Veröffentlichungstag und Bekanntmachung des Hinweises auf die Patenterteilung: **22.09.2010**
(21) Anmeldenummer: 07012864.0
(22) Anmeldetag: 30.06.2007
(51) Int. Cl.: B23K 26/08

(54) **Maschine zum Bearbeiten von Werkstücken und Verfahren zum maschinellen Bearbeiten von Werkstücken**
Machine for machining workpieces and method for machine processing of workpieces
Machine destinée au traitement de pièces à usiner et procédé destiné au traitement mécanique de pièces à usiner

(43) Veröffentlichungstag der Anmeldung: 31.12.2008
(73) Patentinhaber: TRUMPF Werkzeugmaschinen GmbH + Co. KG, 71254 Ditzingen (DE)
(72) Erfinder: Schmauder, Frank, 72555 Metzingen (DE)
(74) Vertreter: Kohler Schmid Möbus

(56) Entgegenhaltungen:
- EP-A- 1 557 244
- WO-A-00/17724
- DE-T- 19 581 537

## Beschreibung

Die Erfindung betrifft eine Maschine zum Bearbeiten von Werkstücken, insbesondere von Blechen, mit einer Bearbeitungseinrichtung sowie mit einem Hauptantrieb und einem davon verschiedenen Zusatzantrieb, beide zur Erzeugung einer zur Werkstückbearbeitung vorgesehenen Relativbewegung der Bearbeitungseinrichtung und eines Werkstückes, und mit einer numerischen Maschinensteuerung zur Steuerung des Haupt- und des Zusatzantriebes, wobei mittels des Hauptantriebes die Bearbeitungseinrichtung relativ zu dem Werkstück und/oder das Werkstück relativ zu der Bearbeitungseinrichtung mit einer Hauptbewegung bewegbar ist und wobei mittels des Zusatzantriebes die Bearbeitungseinrichtung relativ zu dem Werkstück mit einer Zusatzbewegung bewegbar ist. Die Erfindung betrifft weiterhin ein Verfahren zum maschinellen Bearbeiten von Werkstücken der vorstehenden Art, ein Bearbeitungsprogramm, ein Verfahren zum Erstellen eines derartigen Bearbeitungsprogramms sowie ein Computerprogrammprodukt zum Durchführen eines Verfahrens zum Erstellen eines Bearbeitungsprogramms der genannten Art.

Aus EP 0 594 699 B1 sind eine gattungsgemäße Werkzeugmaschine und ein gattungsgemäßes Verfahren zum Laserbearbeiten von Werkstücken bekannt. Die vorbekannte Maschine weist ein über einem Werkstück angeordnetes Portal und einen an dem Portal angeordneten Werkzeugträger auf. Zur Erzeugung einer Hauptbewegung eines an dem Werkzeugträger als Bearbeitungseinrichtung angeordneten Laserstrahls werden das Portal mitsamt dem Werkzeugträger und/oder der Werkzeugträger entlang des Portals bewegt. Eine Zusatzbewegung des Laserstrahls relativ zu dem Werkzeugträger wird mittels einer hochdynamischen Zusatzeinrichtung erzeugt. Um eine möglichst hohe Gesamtbeschleunigung des Laserstrahls zu erreichen, wird der Bewegung des Portals und des Werkzeugträgers die mittels der hochdynamischen Zusatzeinrichtung erzeugte Zusatzbewegung des Laserstrahls überlagert. Bei dieser Zusatzbewegung wird der Laserstrahl ausgehend von einer unveränderlichen Grundposition bewegt.

Der EP 1 557 244 ist eine gattungsgemäße Werkzeugmaschine zu entnehmen, welche ein Arbeitsorgan aufweist, das mittels einer Verschiebestruktur in einer Bewegungsebene gesteuert verschiebbar ist. Die Verschiebestruktur umfasst eine erste Verschiebeeinheit und eine zweite Verschiebeeinheit, die zwischen der ersten Verschiebeeinheit und dem Arbeitsorgan angeordnet ist. Die Verschiebeeinheiten können simultan Linearbewegungen in einer Bewegungsebene ausführen, wodurch eine Gesamtverschiebung des Arbeitsorgans relativ zu einem Werkstück erzeugt werden kann. Die Linearbewegungen der zweiten Verschiebeeinheit gehen von einer mittigen Ruhe- bzw. Grundposition aus.

Die WO 00/17724 beschreibt eine Maschine zum Bearbeiten von Werkstücken mit einem ersten hochdynamischen Antrieb zum Bewegen eines Werkstückes z. B. in Form eines Wafers sowie mit einem zweiten niederdynamischen Antrieb zum Bewegen einer Bearbeitungseinrichtung.

Die Erfindung hat sich zum Ziel gesetzt, eine Maschine und ein Verfahren zum Bearbeiten von Werkstücken mit einer hohen Anpassungsfähigkeit an verschiedene Bearbeitungsaufgaben verfügbar zu machen und ein Bearbeitungsprogramm, ein Verfahren zum Erstellen eines derartigen Bearbeitungsprogramms sowie ein Computerprogrammprodukt zum Erstellen eines Bearbeitungsprogramms der genannten Art bereitzustellen.

Erfindungsgemäß wird diese Aufgabe durch die Gegenstände der Patentansprüche 1, 17, 25, 26, und 27 gelöst.

Aufgrund der im Falle der Erfindung durch die Zustellung der Bearbeitungseinrichtung in unterschiedliche Grundpositionen gewonnenen Einstellmöglichkeit, kann die Bewegung der Bearbeitungseinrichtung an verschiedene bei einer Werkstückbearbeitung auftretende Anforderungen angepasst werden und gleichzeitig kann aufgrund der Zusatzbewegungen eine hochdynamische Werkstückbearbeitung, z. B. ein hochdynamisches Laserschneiden, weitgehend in dem gesamten Verstellbereich der Bearbeitungseinrichtung sichergestellt werden. Im Falle einer Laserbearbeitungsmaschine ist es möglich, einen Bewegungs- bzw. einen Arbeitsbereich des Laserschneidstrahls beim Laserschneiden durch unterschiedlich voreingestellte Grundpositionen unterschiedlich zu definieren. Die Definition des Bewegungs- bzw. Arbeitsbereiches des Laserschneidstrahls kann auf die auszuführende Bearbeitungsaufgabe, beispielsweise auf ein hochdynamisches Freischneiden von sehr kleinen Blechausschnitten oder auf ein hochdynamisches Freischneiden von relativ großen Abfallteilen, abgestimmt werden.

Um ein Verfahren der erfindungsgemäßen Art durchzuführen, wird ein eigens hierfür erstelltes Bearbeitungsprogramm (Patentanspruch 25) auf einer numerischen Maschinensteuerung der erfindungsgemäßen Bearbeitungsmaschine ausgeführt. Bearbeitungsprogramme umfassen eine Vielzahl von Steuerbefehlen, welche zum größten Teil dazu dienen, dass die Maschinensteuerung Stellsignale für die Antriebe der Maschine erzeugt, durch welche die für die Voreinstellung und die für die Bearbeitungsabläufe erforderlichen Bewegungen der angetriebenen Komponenten der Maschine bewirkt werden.

Im Falle der Erfindung beinhaltet das Bearbeitungsprogramm Steuerbefehle, aufgrund derer die Maschinensteuerung Stellsignale für den Stellantrieb der Bearbeitungseinrichtung generiert, durch welche der Stellantrieb seinerseits veranlasst wird, die Bearbeitungseinrichtung in unterschiedliche Grundpositionen zuzustellen.

Innerhalb des Bearbeitungsprogramms sind die Steuerbefehle für die Stellbewegung der Bearbeitungseinrichtung in eine bestimmte Grundposition vor Steuerbefehlen angeordnet, welche den Bearbeitungsvorgang bewirken, für den die vordefinierte Grundposition der Bearbeitungseinrichtung erforderlich bzw. vorteilhaft ist.

Erfindungsgemäß wird bereits beim Erstellen des Bearbeitungsprogramms (Patentanspruch 26) die Möglichkeit, die Grundposition der Bearbeitungseinrichtung zu ändern, berücksichtigt. Die Steuerbefehle für die Stellbewegungen der Bearbeitungseinrichtung in unterschiedliche Grundpositionen werden beim Erstellen des Bearbeitungsprogramms erzeugt und mit anderen Steuerbefehlen in die richtige Reihenfolge gebracht.

Zum Erstellen von Bearbeitungsprogrammen wird in der Praxis zumeist ein rechnerunterstütztes Programmiersystem eingesetzt, welches im Wesentlichen aus einem auf einer Datenverarbeitungsanlage (z. B. Computer) ausgeführten Computerprogrammprodukt besteht (Patentanspruch 27). Im Falle der Erfindung ermöglicht das Programmiersystem einem Anwender, unterschiedliche Grundpositionen der Bearbeitungseinrichtung, wenn dies nötig bzw. vorteilhaft ist, festzulegen und unterstützt die Erzeugung der Steuerbefehle für die Stellbewegungen in unterschiedliche Grundpositionen. Vorteilhafterweise erfolgt die Festlegung unterschiedlicher Grundpositionen und die Erzeugung der entsprechenden Steuerbefehle durch das Programmiersystem weitgehend automatisch.

Besondere Ausführungsarten der Erfindung nach den unabhängigen Patentansprüchen ergeben sich aus den abhängigen Patentansprüchen 2 bis 16 und 18 bis 24.

Die Erfindungsbauart nach Patentanspruch 2 ist besonders kostengünstig und kompakt bauend. Indem der Stellantrieb von dem Zusatzantrieb gebildet ist, kann ein Antrieb eingespart werden.

In bevorzugter Ausgestaltung der Erfindung erfolgt ausweislich der Patentansprüche 3 und 18 bei einer Stellbewegung der Bearbeitungseinrichtung eine mittels des Hauptantriebes erzeugte Ausgleichsbewegung des Werkstückes bzw. der Bearbeitungseinrichtung, um die Relativposition der Bearbeitungseinrichtung und des Werkstückes vor der entsprechenden Stellbewegung wiederherzustellen. Würden vor und nach den Stellbewegungen der Bearbeitungseinrichtung jeweils unterschiedliche Relativpositionen von Bearbeitungseinrichtung und Werkstück vorliegen, müsste dies bei der Steuerung der Bewegung für die nachfolgende Werkstückbearbeitung berücksichtigt werden. Bleibt die Relativposition aber erhalten bzw. wird die Relativposition wiederhergestellt, sind die Bewegungsabläufe übersichtlicher und deren Steuerung insgesamt wesentlich vereinfacht.

Im Interesse hoher Bearbeitungsgeschwindigkeiten sind in weiterer Ausgestaltung der Erfindung die kennzeichnenden Merkmale der Patentansprüche 4 und 20 vorgesehen. Wird beispielsweise die Bearbeitungseinrichtung mittels des Zusatzantriebes entlang einer Bewegungsachse (z. B. x-Achse oder y-Achse) bewegt und wird gleichzeitig das Werkstück mittels des Hauptantriebes entlang derselben Bewegungsachse aber in entgegengesetzter Richtung verlagert, so summieren sich die beiden unterschiedlich erzeugten Bewegungsanteile zu einer Gesamtbewegung. Infolgedessen addieren sich auch die Einzelbeschleunigungen des Hauptantriebes einerseits und des Zusatzantriebes andererseits zu einer Gesamtbeschleunigung. Die erzielte hohe Gesamtbeschleunigung wiederum ermöglicht, insbesondere auch entlang kleiner Krümmungsradien, eine Werkstückbearbeitung mit hohen Bearbeitungsgeschwindigkeiten.

Nach den Patentansprüchen 5 und 21 erfolgt die Aufteilung der Bewegungsanteile für die Hauptbewegung und die Zusatzbewegung derart, dass mittels der Zusatzbewegung der Bearbeitungseinrichtung ein Bahnfolgefehler der mit einer Hauptbewegung bewegten Bearbeitungseinrichtung bzw. des mit einer Hauptbewegung bewegten Werkstückes ausgeglichen wird. Beispielsweise kann ein schweres Werkstück mittels des Hauptantriebes bei einer Werkstückbearbeitung entlang einer Kontur mit kleinen Krümmungsradien antriebsschonend auf einer groben Bewegungsbahn bewegt werden, während die wesentlich leichtere Bearbeitungseinrichtung mit Zusatzbewegungen exakt der Kontur folgt.

Bei einer bevorzugten Ausführungsart der Erfindung gemäß Patentanspruch 6 ist gewährleistet, dass bei Grundpositionen der Bearbeitungseinrichtung innerhalb eines relativ großen Teiles des Verstellbereiches der zu erwartende Bahnfolgefehler richtungsunabhängig mittels einer Zusatzbewegung ausgeglichen werden kann. Eine antriebsschonende Überlagerung der Hauptbewegung und der Zusatzbewegung kann folglich bei sehr unterschiedlichen, d. h. weit von einander beabstandeten, Grundpositionen erfolgen. Die Anpassungsfähigkeit an unterschiedliche Bearbeitungsaufgaben ist demnach besonders ausgeprägt.

In einer Weiterbildung der Erfindung sind die kennzeichnenden Merkmale von Patentanspruch 7 vorgesehen, um eine hohe Prozesssicherheit zu erzielen. Da die Bearbeitungseinrichtung ausgehend von einer eingestellten Grundposition nur in einem definierten Zusatzbewegungsbereich Zusatzbewegungen ausführt, muss nur in diesem begrenzten Bereich sichergestellt werden, dass keine Kollisionen der Bearbeitungseinrichtung mit anderen Funktionseinheiten auftreten.

Bei einer bevorzugten Ausführungsart der Erfindung gemäß Patentanspruch 8 sind unterschiedlichen Grundpositionen der Bearbeitungseinrichtung unterschiedliche Positionen der Bearbeitungseinrichtung gegenüber einer weiteren Funktionseinheit der Maschine zugeordnet. Einerseits ist die Bearbeitungseinrichtung somit in unterschiedliche, jeweils für verschiedene Bearbeitungsaufgaben zweckmäßige Grundpositionen zustellbar. Andererseits berücksichtigt die Grundposition der Bearbeitungseinrichtung weitere Funktionseinheiten. Beispielsweise kann durch Wahl einer entsprechenden Grundposition der Abstand zwischen einer als weitere Funktionseinheit vorgesehenen Werkstückhalterung und der in der Grundposition befindlichen Bearbeitungseinrichtung derart definiert werden, dass Blechbereiche in unmittelbarer Nähe der Werkstückhalterung bearbeitbar sind (Totbereichsminimierung).

Patentanspruch 9 betrifft eine Ausführungsform der Erfindung, die sich durch eine flexibel einsetzbare Bearbeitungseinrichtung in Form eines Schneidstrahls auszeichnet. Insbesondere der Einsatz eines Laserschneidstrahls hat sich in der Praxis bewährt.

Besonders vorteilhaft und praxisrelevant sind die Ausführungsarten der Erfindung mit den kennzeichnenden Merkmalen der Patentansprüche 10 bis 13.

Ist als weitere Funktionseinheit eine Werkstückhalterung vorgesehen, kann eine zweckentsprechende Grundposition der Bearbeitungseinrichtung - wie bereits vorstehend erläutert - eine Totbereichsreduzierung ermöglichen.

Im Falle einer Schneidmatrize als weitere Funktionseinheit kann die Möglichkeit zur Variation der voreingestellten Grundpositionen und die damit verbundene Möglichkeit zur Variation der gegenseitigen Lage der Bearbeitungseinrichtung und der Schneidmatrize dazu genutzt werden, besonders kleine Blechausschnitte freizuschneiden, ohne dass diese nach dem Freischneiden in die Öffnung der Schneidmatrize fallen. Zu diesem Zweck kann die Bearbeitungseinrichtung eine Grundposition in einem Randbereich der Schneidmatrize einnehmen.

Ist die Größe des Verstellbereichs der Bearbeitungseinrichtung derart auf z. B. die Größe einer Schneidmatrize abgestimmt, dass der Schneidstrahl bei jeder Grundposition innerhalb der Öffnung der Schneidmatrize angeordnet ist, so kann eine wirksame Entfernung von entstehenden Emissionen durch die Öffnung der Schneidmatrize bei jeder Grundposition sichergestellt werden.

Als weitere Funktionseinheit kann erfindungsgemäß eine Werkstückauflage vorgesehen sein. In diesem Fall können durch eine Änderung der gegenseitigen Lage der Bearbeitungseinrichtung und der Werkstückauflage die bei der Werkstückbearbeitung durch die Werkstückauflage unterstützten Abschnitte des Werkstückes variiert werden.

Eine robuste Bauart der Erfindung ergibt sich nach Patentanspruch 14, indem zur Bewegung der Bearbeitungseinrichtung ein Bearbeitungskopf, an welchem die Bearbeitungseinrichtung angeordnet ist, mittels des Zusatzantriebes und/oder mittels des Stellantriebes entlang einer maschinenseitigen Führung bewegbar ist.

Die bevorzugten Ausführungsarten der Erfindung nach den Patentansprüchen 15 und 16 zeichnen sich durch besonders kurze Prozesszeiten aus. Eine Grundposition der Bearbeitungseinrichtung kann für das Freischneiden eines zu erstellenden Werkstückausschnittes derart definiert werden, dass der Werkstückausschnitt nach dem Freischneiden eine bestimmte Lage innerhalb der Maschine einnimmt. Aus dieser Lage kann er dann vorteilhafterweise ohne zusätzliches Umpositionieren ausgeschleust werden.

Steuerungstechnisch vorteilhaft ist die Weiterbildung des erfindungsgemäßen Verfahrens nach Patentanspruch 19. Aufgrund der Definition einer Standard-Grundposition muss die gesonderte Vorgabe einer Grundposition nur dann erfolgen, wenn die Bearbeitungseinrichtung in eine von der Standard-Grundposition abweichende Grundposition zugestellt werden soll.

Gemäß Patentanspruch 22 wird die Bearbeitungseinrichtung abgestimmt auf einen an die Werkstückbearbeitung anschließenden Folgeschritt, wie beispielsweise ein Ausschleusen eines Werkstückausschnittes, in eine der Grundpositionen zugestellt.

Steuerungstechnisch einfache Verhältnisse ergeben sich, wenn eine Relativbewegung der Bearbeitungseinrichtung und des Werkstückes zur Werkstückbearbeitung, welche nach dem Zustellen der Bearbeitungseinrichtung in eine Grundposition erfolgt, ausschließlich mittels einer Hauptbewegung des Werkstückes erzeugt wird (Patentansprüche 23 und 24). Besonders dann, wenn die Bearbeitungseinrichtung, unabhängig von der voreingestellten Grundposition, nur Zusatzbewegungen innerhalb des Verstellbereiches ausführen kann, ist eine einfach steuerbare Werkstückbearbeitung sichergestellt. Denn bei einer eingestellten Grundposition am Rand des Verstellbereiches können weitgehend nur vom Rand des Verstellbereiches weg gerichtete Zusatzbewegungen erfolgen. Eine richtungsbezogene Einschränkung der Zusatzbewegung wäre steuerungstechnisch nur mit großem Aufwand zu realisieren. Dieser Aufwand entfällt, wenn - wie erfindungsgemäß vorgesehen - die Relativbewegung ausschließlich mittels einer Hauptbewegung, d. h. ohne Zusatzbewegung, erzeugt wird.

Nachstehend wird die Erfindung anhand beispielhafter schematischer Darstellungen näher erläutert. Es zeigen:
- **Fig. 1**: eine kombinierte Stanz-/Laserschneidmaschine mit einem Stanzkopf sowie mit einem Laserschneidkopf,
- **Fig. 2**: den Laserschneidkopf der kombinierten Stanz-/Laserschneidmaschine gemäß Figur 1 mit einer Bewegungseinheit des Laserschneidkopfes,
- **Fig. 3**: eine Laserschneidmatrize der kombinierte Stanz-/Laserschneidmaschine gemäß Figur 1 in der Draufsicht,
- **Fig. 4**: einzelne Schritte einer Werkstückbearbeitung mit einer kombinierten Stanz-/Laserschneidmaschine gemäß Figur 1,
- **Fig. 5**: einen Ablauf beim Erstellen eines Bearbeitungsprogramms für eine kombinierte Stanz-/Laserschneidmaschine gemäß Figur 1 und
- **Fig. 6**: den Aufbau eines Programmiersystems zum Erstellen eines Bearbeitungsprogramms für eine kombinierte **Stanz-** /Laserschneidmaschine gemäß Figur 1.

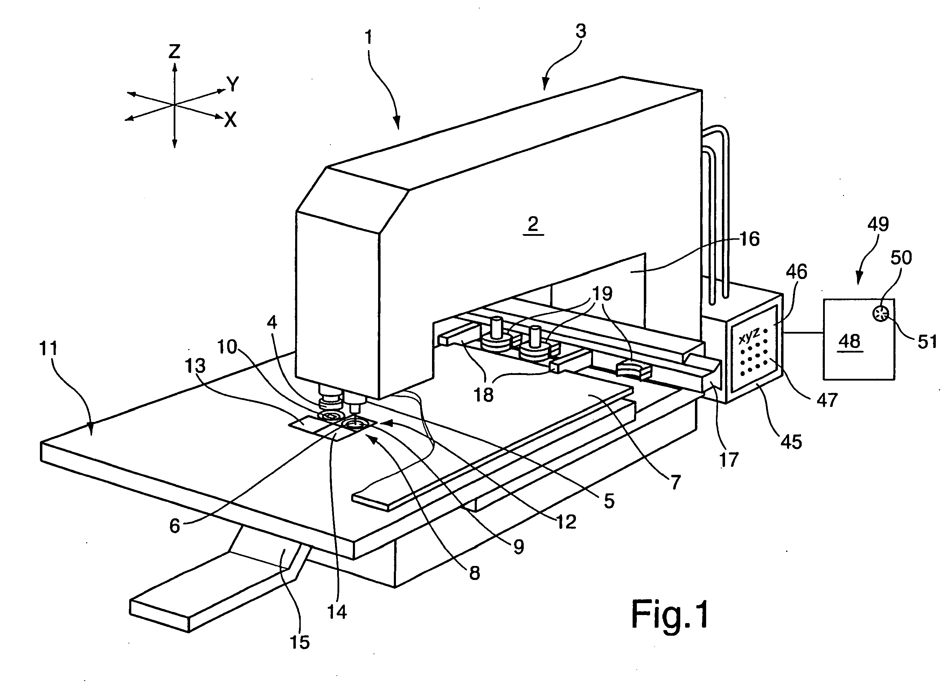

Figur 1 zeigt eine Maschine 1 in Form einer kombinierten Stanz-/Laserschneidmaschine. An einem oberen Gestellschenkel 2 eines C-förmigen Maschinengestells 3 der Maschine 1 sind zwei Bearbeitungsköpfe, ein Stanzkopf 4 und ein Laserschneidkopf 5, vorgesehen. Der Laserschneidkopf 5 ist eine Quelle eines thermischen Schneidstrahls in Form eines Laserschneidstrahls 6, welcher als eine Bearbeitungseinrichtung der Maschine 1 dient. An der von dem Laserschneidkopf 5 abliegenden Seite eines zu bearbeitenden Blechs 7, d. h. unterhalb des Laserschneidkopfes 5, ist als Schneidmatrize eine Laserschneidmatrize 8 angeordnet. Diese weist eine Matrizenöffnung 9 auf, in welche der Laserschneidstrahl 6 bei der Werkstückbearbeitung eintaucht. Über die Matrizenöffnung 9 werden bei der Laserbearbeitung entstehende Emissionen mittels einer nicht gezeigten Absaugung entfernt. Unterhalb des Stanzkopfes 4 ist ein Stanzunterwerkzeug 10 vorgesehen.

Mittels der Maschine 1 werden aus dem Blech 7 Blechausschnitte gewonnen. Die aus dem Blech 7 freigeschnittenen Blechausschnitte können auf unterschiedliche Weise aus der Maschine 1 ausgeschleust werden.

Entweder entnimmt ein Bediener sie von Hand oder sie werden mittels nicht gezeigter Handhabungseinrichtungen, beispielsweise mittels eines Saugerrahmens, aus der Maschine 1 abtransportiert. Zum Ausschleusen von ausreichend kleinen Blechausschnitten weist eine das Blech 7 lagernde Werkstückauflage 11 mehrere Klappen 12, 13, 14 auf. Mittels der Klappen 12, 13, 14 sind Öffnungen in der Werkstückauflage 11 öffen- und schließbar. Die Klappe 12 ist unterhalb des Laserschneidkopfes 5 angeordnet. Sie dient zugleich als Lagerung der Laserschneidmatrize 8, so dass bei einer Öffnungs- bzw. einer Schließbewegung der Klappe 12 auch die Laserschneidmatrize 8 mitbewegt wird. Die Klappen 13, 14 sind vor dem Stanzunterwerkzeug 10 und vor der Laserschneidmatrize 8 vorgesehen. Durch die mittels der Klappen 12, 13, 14 verschließbaren Öffnungen können die Blechausschnitte bei geöffneten Klappen 12, 13, 14 auf eine unterhalb der Werkstückauflage 11 angeordnete Rutsche 15 fallen.

Zusätzlich können kleinere Blechausschnitte, welche nicht für eine weitere Verwendung vorgesehen sind, d. h. kleinere Abfallteile, durch die Matrizenöffnung 9 aus der Maschine 1 entfernt werden.

Die zur Werkstückbearbeitung erforderliche Relativbewegung zwischen dem Blech 7 und den Bearbeitungseinrichtungen, insbesondere dem Laserschneidstrahl 6, wird teilweise mittels einer in einem Rachen 16 des Maschinengestells 3 angeordneten herkömmlichen Koordinatenführung 17 erzeugt. Das Blech 7 ist an der Koordinatenführung 17 über als Spannpratzen 18 ausgebildete Werkstückhalterungen festgelegt. Zusätzlich weist die Koordinatenführung 17 Werkzeughalterungen 19 eines Werkzeugmagazins auf.

Das Blech 7 kann frei in einer x/y-Ebene (Koordinatenachsen x, y in Figur 1) bewegt werden. Die Koordinatenführung 17 bildet den Hauptantrieb für die Relativbewegung des Laserschneidstrahls 6 einerseits und des Blechs 7 andererseits. Das Blech 7 ist dementsprechend mittels der Koordinatenführung 17 mit einer Hauptbewegung bewegbar.

Zusätzlich zu der mittels der Koordinatenführung 17 erzeugten Hauptbewegung des Blechs 7 kann eine Relativbewegung zwischen dem Blech 7 und dem Laserschneidstrahl 6 durch eine Bewegung des Laserschneidstrahls 6 erzeugt werden. Zu diesem Zweck ist der Laserschneidkopf 5 an dem Gestellschenkel 2 der Maschine 1 beweglich geführt. Die Bewegungsmöglichkeiten des Laserschneidkopfes 5 gegenüber dem Blech 7 sind in Figur 1 durch Koordinatenachsen x, y, z veranschaulicht.

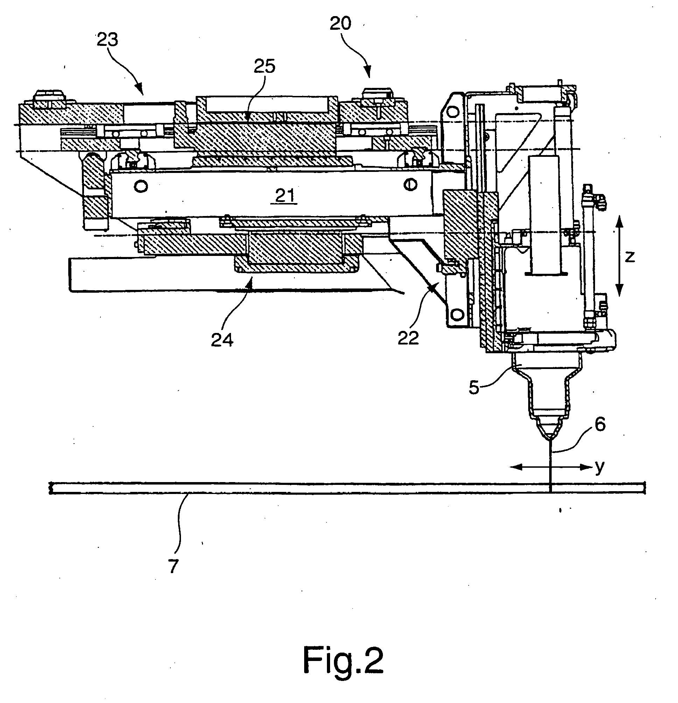

Die Bewegung des Laserschneidkopfes 5 wird mittels eines Linearantriebes 20 erzeugt (Figur 2). Der Laserschneidkopf 5 ist entlang der z-Achse gegenüber einem Schlitten 21 mittels einer z-Antriebseinheit 22 bewegbar. Durch die Bewegungsmöglichkeit des Laserschneidkopfes 5 in z-Richtung kann der Abstand des Laserschneidkopfes 5 von dem Blech 7 verändert werden, um so die Fokuslage des aus dem Laserschneidkopf 5 austretenden Laserschneidstrahls 6 gegenüber dem zu bearbeitenden Blech 7 einzustellen.

Der mit dem Laserschneidkopf 5 versehene Schlitten 21 ist an dem oberen Gestellschenkel 2 des Maschinengestells 3 sowohl in x-Richtung als auch in y-Richtung beweglich gelagert. Die x-Richtung verläuft in Figur 2 senkrecht zur Zeichenebene. Zur Führung des Schlittens 21 sowie des daran angebrachten Laserschneidkopfes 5 bei einer Bewegung in x- sowie in y-Richtung ist eine maschinenseitige, nach Art eines Kreuzschlittens ausgebildete Führung 23 vorgesehen. Zum Antrieb des Schlittens 21 in der x/y-Ebene dienen eine x-Antriebseinheit 24 und eine y-Antriebseinheit 25, welche als hochdynamische Linearantriebe ausgeführt sind.

Die mittels der x-Antriebseinheit 24 und der y-Antriebseinheit 25 maximal erreichbare Beschleunigung des Laserschneidkopfes 5 in der x/y-Ebene ist wesentlich größer als die mittels der Koordinatenführung 17 maximal erreichbare Beschleunigung des Blechs 7. Allerdings kann das Blech 7 mittels der Koordinatenführung 17 über einen wesentlich größeren Bewegungsbereich bewegt werden als der Laserschneidkopf 5 mittels der der x-Antriebseinheit 24 und der y-Antriebseinheit 25.

Innerhalb eines Verstellbereichs 26 kann der Laserschneidstrahl 6 mittels der x-Antriebseinheit 24 und der y-Antriebseinheit 25 zur Werkstückbearbeitung in unterschiedliche Grundpositionen zugestellt werden. Demnach dienen die x-Antriebseinheit 24 und die y-Antriebseinheit 25 als Stellantriebe.

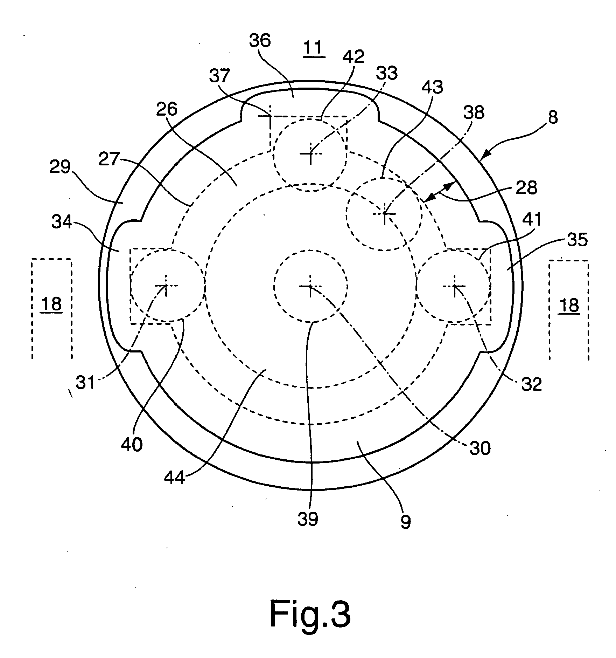

Der Verstellbereich 26 entspricht dem in Figur 3 durch einen gestrichelt angedeuteten Rand 27 begrenzten Bereich. Der Verstellbereich 26 liegt vollständig innerhalb der Matrizenöffnung 9 und ist auf deren Form und Größe abgestimmt. Der Rand 27 des Verstellbereichs 26 ist mit einem Sicherheitsabstand 28 von einem gegen die Horizontale geneigten Matrizenrand 29, welcher die Matrizenöffnung 9 umgibt, beabstandet. An den Matrizenrand 29 grenzt die Werkstückauflage 11.

In einer Standard-Grundposition 30 ist der Laserschneidstrahl 6 mittig in der Matrizenöffnung 9 angeordnet. Als weitere Grundpositionen des Laserschneidstrahls 6 sind die Positionen 31, 32 und 33 in Figur 3 gezeigt. In den Grundpositionen 31, 32, 33 ist der Laserschneidstrahl 6 jeweils innerhalb einer Tasche 34, 35 oder 36 der Matrizenöffnung 9 angeordnet. In einer weiteren Grundposition 37 nimmt der Laserschneidstrahl 6 eine Position am Rand 27 seines Verstellbereiches 26 ein. Des Weiteren ist in Figur 3 eine radial zwischen der Standard-Grundposition 30 und der Grundposition 37 angeordnete Grundposition 38 gezeigt.

Die zur Werkstückbearbeitung vorgesehene Relativbewegung des Laserschneidstrahls 6 und des Blechs 7 ist entlang ein und derselben Ebene, nämlich der x/y-Ebene, sowohl mittels der Koordinatenführung 17 als auch mittels der x-Antriebseinheit 24 und/oder der y-Antriebseinheit 25 erzeugbar. Mittels der x-Antriebseinheit 24 und der y-Antriebseinheit 25 kann bei Bedarf der Laserschneidstrahl 6 ausgehend von der jeweils eingestellten Grundposition mit einer Zusatzbewegung bewegt werden. Demnach dienen die x-Antriebseinheit 24 und die y-Antriebseinheit 25 nicht nur als Stellantriebe sondern auch als Zusatzantriebe.

Grundsätzlich kann es vorteilhaft sein, die Bearbeitungseinrichtung in unterschiedliche Grundpositionen zustellbar auszubilden, wenn die Hauptbewegung und die Zusatzbewegung entlang nur einer gemeinsamen Bewegungsachse erzeugbar sind.

In dem gezeigten Beispielsfall ergibt sich die Relativbewegung des Laserschneidstrahls 6 und des Blechs 7 durch eine Überlagerung der mittels der Koordinatenführung 17 erzeugten Hauptbewegung des Blechs 7 und der von einer eingestellten Grundposition ausgehenden, mittels der x-Antriebseinheit 24 und/oder der y-Antriebseinheit 25 erzeugten Zusatzbewegung des Laserschneidstrahls 6.

Ausgehend von einer eingestellten Grundposition führt der Laserschneidstrahl 6 eine Zusatzbewegung aus, die betragsmäßig den sich maximal einstellenden Bahnfolgefehler des Blechs 7 nicht übersteigt. Auf die Entstehung des Bahnfolgefehlers des Blechs 7 wird nachstehend ausführlicher eingegangen.

Einer Grundposition des Laserschneidstrahls 6 ist ein Zusatzbewegungsbereich zugeordnet, innerhalb dessen der Laserschneidstrahl 6 bei Bedarf mittels der x-Antriebseinheit 24 und/oder der y-Antriebseinheit 25 mit einer von der eingestellten Grundposition ausgehenden Zusatzbewegung bewegbar ist.

In Figur 3 sind den Grundpositionen 30, 31, 32, 33, 38 zugeordnete kreisförmige Zusatzbewegungsbereiche 39, 40, 41, 42, 43 dargestellt. Die Radien der Zusatzbewegungsbereiche 39, 40, 41, 42, 43 entsprechen dem Betrag des maximal zu erwartenden Bahnfolgefehlers des Blechs 7. Grundsätzlich kann der Laserschneidstrahl 6 nur Zusatzbewegungen innerhalb des Verstellbereiches 26 ausführen. Außerhalb des Verstellbereiches 26 wäre die Absaugung der bei dem Laserschneiden entstehenden Emissionen nicht gewährleistet und würde z. B. der Matrizenrand 29 durch den Laserschneidstrahl 6 beschädigt.

Der Durchmesser des Verstellbereichs 26 des Laserschneidstrahls 6 entspricht in etwa dem Achtfachen des maximal zu erwartenden Bahnfolgefehlers. Dies ermöglicht die Änderung der Grundposition über einen großen Bereich, ohne dass Einschränkungen für die Zusatzbewegungen entstehen, die zum Ausgleich eines tatsächlich aufgetretenen Bahnfolgefehlers auszuführen sind.

Bei der Standard-Grundposition 30 ist der radiale Abstand des Laserschneidstrahls 6 von dem Matrizenrand 29 bei sämtlichen Positionen innerhalb des Zusatzbewegungsbereiches 39 sehr groß. Infolgedessen werden Beschädigungen oder eine Verschmutzung des Matrizenrands 29 während einer von der Standard-Grundposition 30 ausgehenden Laserbearbeitung weitgehend vermieden.

Der Zusatzbewegungsbereich 43 der Grundposition 38 grenzt unmittelbar an den Rand 27 des Verstellbereiches 26, so dass der Laserschneidstrahl 6 ausgehend von der Grundposition 38 innerhalb der x/y-Ebene gerade noch in jede Richtung eine Zusatzbewegung mit dem Betrag des maximal zu erwartenden Bahnfolgefehlers ausführen kann. Nur bei Grundpositionen; welche innerhalb des in Figur 3 angedeuteten kreisförmigen Bereiches 44 liegen, ist gewährleistet, dass ausgehend von der eingestellten Grundposition innerhalb der x/y-Ebene richtungsunabhängig eine Zusatzbewegung mit dem Betrag des maximal zu erwartenden Bahnfolgefehlers möglich ist. Eine Ausnahme bilden die Grundpositionen 31, 32, 33 aufgrund der Taschen 34, 35, 36.

Wird der Laserschneidstrahl 6 in die Grundpositionen 31 oder 32 zugestellt, so können Bereiche des Blechs 7 in unmittelbarer Nähe der Spannpratzen 18 bearbeitet werden, welche bei einem in der Standard-Grundposition 30 angeordneten Laserschneidstrahl 6 nicht bearbeitet werden könnten. Die Spannpratzen 18 lassen sich, ohne mit dem Matrizenrand 29 zu kollidieren, nicht weiter in Richtung der Laserschneidmatrize 8 bewegen als es in Figur 3 dargestellt ist. Folglich zeichnen sich die Grundpositionen 31 und 32 durch eine Totbereichsminimierung aus.

Ein weiterer Vorteil der Zustellung des Laserscheidstrahls 6 in die Grundpositionen 31, 32 besteht ebenso wie der Vorteil der Zustellung des Laserschneidstrahls 6 in die Grundposition 33 darin, dass der Abstand des Laserschneidstrahls 6 von dem an die Laserschneidmatrize 8 angrenzenden Bereich der Werkstückauflage 11 verglichen mit dem entsprechenden Abstand bei einer Zustellung des Laserschneidstrahls 6 in die Standard-Grundposition 30 kleiner ist. Dies ist vor allem für das Ausschleusen eines mittels des Laserschneidstrahls 6 freigeschnitten Blechausschnittes von Bedeutung.

Ist ein Blechausschnitt derart klein, dass er durch die Matrizenöffnung 9 fallen könnte, soll er aber nicht wie ein Abfallteil über die Matrizenöffnung 9 ausgeschleust werden, so muss sichergestellt sein, dass bei einem abschließenden Trennen des Blechausschnittes von dem Restblech der Flächenschwerpunkt des Blechausschnittes über der Werkstückauflage 11 angeordnet ist und nicht über der Matrizenöffnung 9. Dies ist aber nur dann möglich, wenn der Abstand des Flächenschwerpunkts des Blechausschnittes von der zuletzt zwischen dem Blechausschnitt und dem Restblech mittels des Laserschneidstrahls 6 zu durchtrennenden Verbindung größer ist als der Abstand des Laserschneidstrahls 6 von der Werkstückauflage 11. Je kleiner also der Abstand des Laserschneidstrahls 6 von der Werkstückauflage 11 ist, desto kleinere Blechausschnitte können ausgeschnitten werden, ohne dass diese in die Matrizenöffnung 9 fallen.

Beispielsweise zeichnen sich alle Positionen des Laserschneidstrahls 6 innerhalb des Zusatzbewegungsbereiches 42 durch ihre Nähe zur Werkstückauflage 11 aus. Allerdings ist der Abstand des Laserschneidstrahls 6 von der Werkstückauflage 11 sehr unterschiedlich, je nachdem welche der Positionen innerhalb des Zusatzbewegungsbereiches 42 der Laserschneidstrahl 6 aufgrund einer Zusatzbewegung beim Laserschneiden einnimmt. Auch dann, wenn der Laserschneidstrahl 6 beim abschließenden Trennschnitt diejenige Position innerhalb der Zusatzbewegungsbereiches 42 einnimmt, welche den größten Abstand von der Werkstückauflage 11 aufweist, muss sichergestellt sein, dass der Flächenschwerpunkt des betreffenden Blechausschnittes über der Werkstückauflage 11 angeordnet ist.

Blechausschnitte, welche nach dem abschließenden Freischneiden vor der Schneidmatrize 8, d. h. ausgehend von der Schneidmatrize 8 in Richtung der Klappe 14, über der Werkstückauflage 11 zu liegen kommen, können durch ein Öffnen der Klappe 12 und je nach Größe des Blechausschnittes durch ein zusätzliches Öffnen der Klappe 14 prozesssicher aus der Maschine 1 abgeführt werden. Aus diesem Grunde ist die Grundposition 33 besonders beim Freischneiden von über die Klappen 12, 14 auszuschleusenden Kleinteilen vorteilhaft.

Bei der voreingestellten Grundposition 37 entspricht der Abstand zwischen Laserschneidstrahl 6 und Werkstückauflage 11 der Breite des Matrizenrandes 29 zzgl. dem Sicherheitsabstand 28 und ist damit minimal. Folglich können bei einer Zustellung des Laserschneidstrahls 6 in die Grundposition 37 die kleinsten Blechausschnitte, die nicht in die Matrizenöffnung 9 fallen sollen, freigeschnitten werden. Allerdings besteht bei dieser Stellung des Laserschneidstrahls 6 aufgrund der Nähe zum Matrizenrand 29 die Gefahr von Verschleiß und Verschmutzung des Matrizenrandes 29.

Außerdem ist bei der Grundposition 37 des Laserschneidstrahls 6 die maximal mögliche Bearbeitungsgeschwindigkeit relativ gering.

So könnte der Laserschneidstrahl 6 ausgehend von der Grundposition 37 nur Zusatzbewegungen ausführen, welche von dem Matrizenrand 29 weg gerichtet sind. Um den steuerungstechnischen Aufwand, der mit der Realisierung derartiger Zusatzbewegungen mit einer in der x/y-Ebene richtungsbezogenen Einschränkung verbunden wäre, zu vermeiden, ist eine Betriebsart der Maschine 1 wählbar, bei welcher die zur Werkstückbearbeitung auszuführende Relativbewegung des Laserstrahls 6 und des Blechs 7 ausschließlich mittels der Koordinatenführung 17 erzeugt wird. Ein weiterer Vorteil dieser Betriebsart besteht darin, dass der sehr kleine Abstand des Laserschneidstrahls 6 von der Werkstückauflage 11 während des gesamten Schneidvorgangs erhalten bleibt. Die allein durch eine Werkstückbewegung erreichbaren Schnittgeschwindigkeiten sind aber, insbesondere bei Konturen mit kleinen Krümmungsradien, niedriger als bei anderen Grundpositionen, die andere nachstehend erläuterte Betriebsarten zulassen.

Neben der genannten Betriebsart mit einer ausschließlich mittels der Koordinatenführung 17 erzeugten Relativbewegung kann die Maschine 1 bei Bedarf auch in einer Betriebsart mit ausschließlich mittels der x-Antriebseinheit 24 und/oder der y-Antriebseinheit 25 erzeugter Relativbewegung von Laserschneidstrahl 6 und Blech 7 betrieben werden.

Wenn möglich, wird aber diejenige Betriebsart der Maschine 1 gewählt, bei welcher die zum Schneiden auszuführende Relativbewegung von Laserschneidstrahl 6 und Blech 7 durch eine Überlagerung einer mittels der Koordinatenführung 17 erzeugten Hauptbewegung und einer mittels der x-Antriebseinheit 24 und/oder der y-Antriebseinheit 25 erzeugten Zusatzbewegung realisiert wird. Denn bei dieser Betriebesart ergibt sich als maximale Gesamtbeschleunigung des Laserschneidstrahls 6 relativ zu dem Blech 7 die Summe der maximalen Beschleunigungen der Koordinatenführung 17 und der x-Antriebseinheit 24 bzw. der y-Antriebseinheit 25. Infolge der höheren Gesamtbeschleunigung können höhere Bearbeitungsgeschwindigkeiten bzw. Schnittgeschwindigkeiten erreicht werden als bei den anderen beiden Betriebsarten.

Vor allem bei der Werkstückbearbeitung entlang kleiner Krümmungsradien wird das Blech 7 mittels der Koordinatenführung 17 entlang einer relativ groben Bewegungsbahn bewegt. Grund hierfür ist der Umstand, dass die Beschleunigung der Koordinatenführung 17 nicht ausreicht, um einer eng gekrümmten Bearbeitungskontur bei hoher Geschwindigkeit exakt zu folgen. Es stellt sich vielmehr ein Bahnfolgefehler des Blechs 7 ("Schleppfehler") ein. Der sich einstellende Bahnfolgefehler ist umso größer, je größer die vorgegebene Bearbeitungsgeschwindigkeit und je niedriger die maximale Beschleunigung der Koordinatenführung 17 bzw. je niedriger ein voreingestellter Verstärkungsfaktor für die Bewegungssteuerung der Koordinatenführung 17 sind. Der Verstärkungsfaktor bestimmt das Maß, mit welchem die Steuerung eine Abweichung von einem Sollwert, z.B. einem Geschwindigkeitssollwert, zu kompensieren versucht.

Die hochdynamischen Zusatzbewegungen des Laserschneidstrahls 6, welche der Blechbewegung überlagert werden, ermöglichen, den sich jeweils einstellenden Bahnfolgefehler des Blechs 7 auszugleichen.

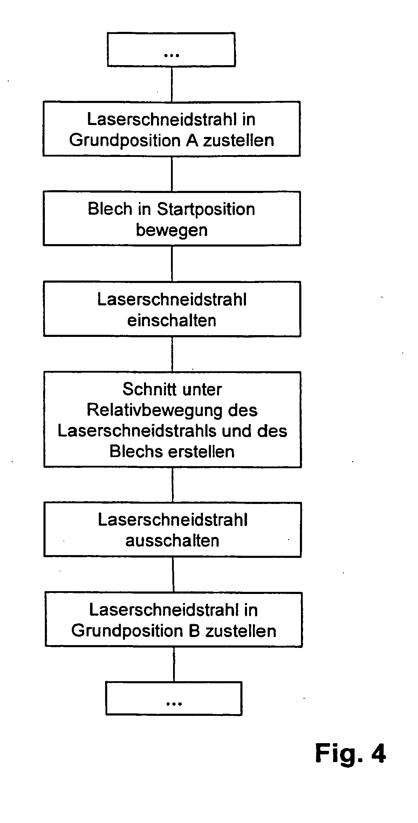

Im Folgenden werden anhand Figur 4 einzelne Schritte einer Werkstückbearbeitung mittels der Maschine 1 erläutert.

Wenn beispielsweise aufgrund des vorgesehenen Ausschleusens eines Blechausschnittes aus der Maschine 1 eine von der Standard-Grundposition 30 abweichende Grundposition für einen Bearbeitungsvorgang erforderlich ist, wird der Laserschneidstrahl 6 mittels der x-Antriebseinheit 24 und/oder der y-Antriebseinheit 25 in die betreffende, von der Standard-Grundposition 30 abweichende Grundposition (Grundposition A nach Figur 4) innerhalb des Verstellbereiches 26 mit einer Stellbewegung zugestellt.

Gleichzeitig mit der Stellbewegung des Laserschneidstrahls 6 wird das Blech 7 mittels der Koordinatenführung 17 um den gleichen Betrag und in gleicher Richtung verfahren. Dadurch bleibt die Relativposition von Laserschneidstrahl 6 und Blech 7 ungeachtet der Verstellung des Laserschneidstrahls 6 in eine andere Grundposition erhalten. Die Bewegungsabläufe der Maschine 1 sind auf diese Weise übersichtlicher und leichter zu programmieren.

Es kann vorteilhaft sein, die Geschwindigkeit der Ausgleichsbewegung des Blechs 7 derart auf die Geschwindigkeit der Stellbewegung des Laserschneidstrahls 6 abzustimmen, dass die Relativposition von Laserschneidstrahl 6 und Blech 7 während der gesamten Stellbewegung des Laserschneidstrahls 6 unverändert bleibt. In diesem Fall ist beispielsweise sichergestellt, dass der Laserschneidkopf 5 bei der Stellbewegung nicht mit eventuell vorhandenen Umformungen des Blechs 7 kollidiert.

Nach der Einstellung der Grundposition des Laserschneidstrahls 6 wird unter Bewegen des Blechs 7 mittels der Koordinatenführung 17 der Laserschneidstrahl 6 gegenüber dem Blech 7 in eine Startposition verbracht, von der ausgehend ein Schnitt an dem Blech 7 zu erstellen ist.

Nach Einschalten des Laserschneidstrahls 6 wird unter Relativbewegung von Blech 7 und Laserschneidstrahl 6 das Blech 7 geschnitten. Diese Relativbewegung wird durch eine Hauptbewegung des Blechs 7 erzeugt, welcher bei Bedarf eine Zusatzbewegung des Laserschneidstrahls 6 überlagert wird. Nachdem der Schnitt erstellt ist, wird der Laserschneidstrahl 6 ausgeschaltet. Anschließend wird der Laserschneidstrahl in eine andere Grundposition (Grundposition B nach Figur 4) zugestellt, ehe erneut Abläufe der vorstehend beschriebenen Art folgen.

Bei der Durchführung der Werkstückbearbeitung wird die Maschine 1 mittels einer numerischen Maschinensteuerung 45 (Figur 1) gesteuert. Von der numerischen Maschinensteuerung 45 wird ein Steuerbefehle 46 aufweisendes Bearbeitungsprogramm 47 abgearbeitet. Das Bearbeitungsprogramm 47 umfasst eine Vielzahl von Steuerbefehlen 46 für sämtliche Vorgänge bei der Bearbeitung des Blechs 7. Hierzu gehören beispielsweise Steuerbefehle 46 für das Ein- und das Ausschalten des Laserschneidstrahls 6 sowie für das Öffnen und das Schließen der Klappen 12, 13, 14.

Insbesondere sorgen Steuerbefehle 46 für die Stellbewegungen des Laserschneidstrahls 6 in unterschiedliche Grundpositionen. Diese Steuerbefehle 46 bewirken, dass die numerische Maschinensteuerung 45 Stellsignale für die x-Antriebseinheit 24 und/oder die y-Antriebseinheit 25 erzeugt, durch welche der Laserschneidstrahl 6 in eine der unterschiedlichen Grundpositionen zugestellt wird. Zusätzlich generiert die Maschinensteuerung 45 Stellsignale für die Koordinatenführung 17, um die vorstehend beschriebene Ausgleichsbewegung des Blechs 7 zur Wiederherstellung bzw. Beibehaltung einer Relativposition des Laserschneidstrahls 6 und des Blechs 7 zu bewirken. Beispielsweise ist ein einzelner Steuerbefehl "Move Head (X1, Y1)" vorgesehen, welcher bewirkt, dass der Laserschneidstrahl 6 mittels der x-Antriebseinheit 24 und/oder der y-Antriebseinheit 25 in eine Grundposition mit den Koordinaten X1 und Y1 innerhalb des Verstellbereiches 26 bewegt wird. Gleichzeitig erfolgt aufgrund des Steuerbefehls "Move Head (X1, Y1)" auch die Ausgleichsbewegung des Blechs 7.

Des Weiteren sind Steuerbefehle 46 vorgesehen, um zwischen den verschiedenen Betriebsarten der Maschine 1 zu wechseln. Allein aufgrund eines einzelnen Steuerbefehls, z. B. "Modus Master", erfolgen sämtliche nachfolgenden Änderungen der Relativposition von Laserschneidstrahl 6 und Blech 7 ausschließlich mittels der Koordinatenführung 17, d. h. mittels Hauptbewegungen des Blechs 7. Zum Wechsel in die Betriebsart mit überlagerten Haupt- und Zusatzbewegungen dient ebenfalls ein einzelner Steuerbefehl, z. B "Modus Master/Slave". In die Betriebsart mit ausschließlich mittels der x-Antriebseinheit 24 und/oder der y-Antriebseinheit 25 erzeugter Relativbewegung von Laserschneidstrahl 6 und Blech 7 kann beispielsweise durch einen einzelnen Steuerbefehl "Modus Slave" gewechselt werden.

Das Bearbeitungsprogramm 47 wird mittels eines rechnerunterstützten Programmiersystems 48 erstellt. Das Programmiersystem 48 ist als ein auf der numerischen Maschinensteuerung 45 oder auf einer getrennten Datenverarbeitungsanlage 49 betriebenes Computerprogrammprodukt 50 mit verschiedenen Softwaremodulen ausgebildet. Das Computerprogrammprodukt weist zweckentsprechend angepasste Kodierungsmittel 51 auf. Beispielsweise werden die Kodierungsmittel 51 durch Anweisungen gebildet, welche mittels eines Prozessors der Datenverarbeitungsanlage 49 abzuarbeiten sind.

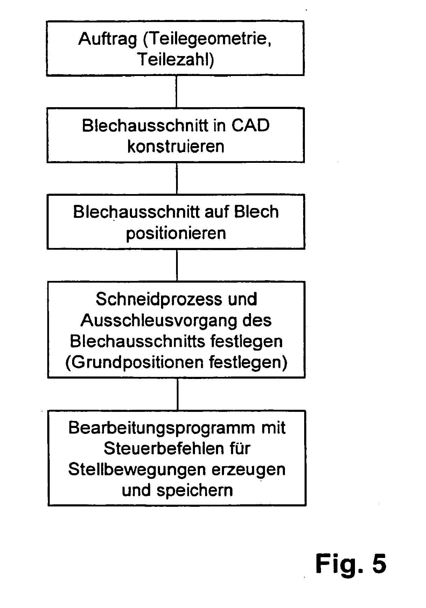

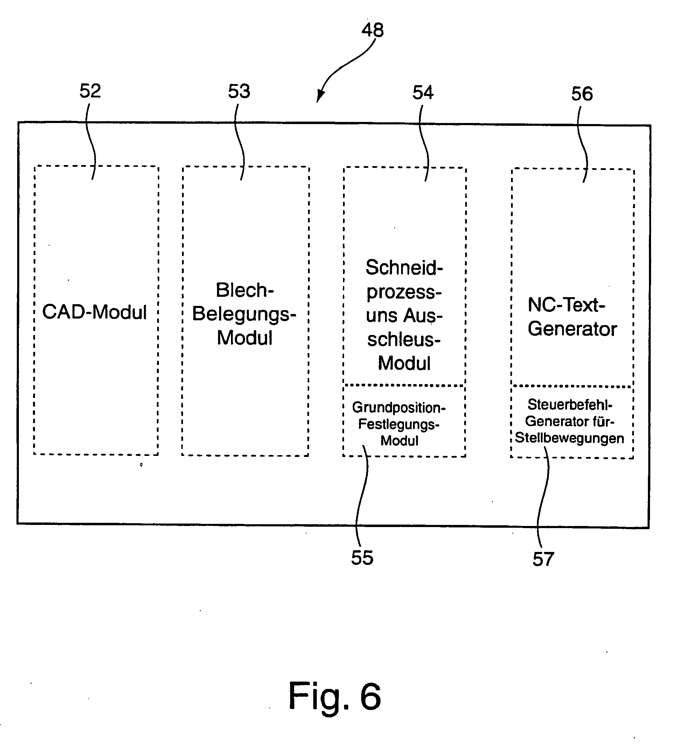

Figur 5 sind einzelne Schritte beim Erstellen eines Bearbeitungsprogramms 47 zu entnehmen. Der Aufbau des beim Erstellen des Bearbeitungsprogramms 47 verwendeten Programmiersystems 48 ist in Figur 6 gezeigt. Ausgelöst durch einen Bearbeitungsauftrag werden mittels eines CAD-Moduls 52 des Programmiersystems 48 die herzustellenden Blechausschnitte mit der gewünschten Teilegeometrie konstruiert. Alternativ können auch CAD-Daten von einem anderen CAD-Programm eingelesen werden.

Mittels eines Blech-Belegungs-Moduls 53 des Programmiersystems 48 wird ein Blechausschnitt bzw. dessen CAD-Modell auf dem Blech 7 bzw. auf dessen CAD-Modell positioniert.

Anschließend wird der Schneidprozess und damit beispielsweise die zeitliche Abfolge der zu erstellenden Schnitte oder die Betriebsart (z. B. ausschließlich Hauptbewegung) beim Erstellen der Schnitte festgelegt. Außerdem wird festgelegt, wie der Blechausschnitt oder ein anfallendes Abfallteil ausgeschleust werden sollen. Ergeben sich für einen Blechausschnitt oder für ein Abfallteil mehrere Ausschleus-Möglichkeiten, so muss der Anwender des Programmiersystems 48 zwischen den Möglichkeiten auswählen. Insgesamt werden der Schneidprozess und das Ausschleusen weitgehend automatisch mittels eines Schneidprozess- und Ausschleus-Moduls 54 des Programmiersystems 48 definiert.

Zur Festlegung der unterschiedlichen Grundpositionen des Laserschneidstrahls 6 weist das Schneidprozess- und Ausschleus-Modul 54 ein Grundposition-Festlegungs-Modul 55 auf. Auf der Grundlage vorgegebener Kriterien ermittelt das Grundposition-Festlegungs-Modul 55, ob eine von der Standard-Grundposition 30 abweichende Grundposition des Laserschneidstrahls 6 für einen bestimmten Schneidvorgang notwendig oder vorteilhaft ist und legt gegebenenfalls die einzustellende Grundposition fest.

Um die Berechnungsalgorithmen zur Ermittlung der Grundpositionen zu vereinfachen, wird nur ein Teil der theoretisch möglichen Grundpositionen innerhalb des Verstellbereiches 26 durch das Grundposition-Festlegungs-Modul 55 geprüft. Dies sind im Wesentlichen die Grundpositionen 30, 31, 32, 33, 37, 38 gemäß Figur 3. Die Auswahl der zu überprüfenden Grundpositionen kann jedoch von dem Anwender geändert werden.

Eine von der Standard-Grundposition 30 abweichende Grundposition kann beispielsweise erforderlich sein, wenn an dem Blech 7 Schnitte in der Nähe einer Spannpratze 18 auszuführen sind. Zunächst wird mittels des Grundposition-Festlegungs-Moduls 55 geprüft, ob der zu bearbeitende Blechbereich mit Hilfe der Koordinatenführung 17 in den Zusatzbewegungsbereich 39 des in der Standard-Grundposition 30 befindlichen Laserschneidstrahls 6 gebracht werden kann, ohne dass die Spannpratze 18 mit der Laserschneidmatrize 8 kollidiert. Im Speziellen wird, um eine störungsfreie Werkstückbearbeitung bei Überlagerung einer Haupt-und einer zur Kompensation des Bahnfolgefehlers der Hauptbewegung ausgeführten Zusatzbewegung sicherzustellen, geprüft, ob jede zu bearbeitende Stelle des betreffenden Blechbereiches mittels der Koordinatenführung 17 kollisionsfrei in jede Position innerhalb des Zusatzbewegungsbereichs 39 gebracht werden kann. Ist dies nicht der Fall, so bestimmt das Grundposition-Festlegungs-Modul 55 als Grundposition für diesen Schneidvorgang die Grundposition 31 oder die Grundposition 32, je nachdem auf welcher Seite der Laserschneidmatrize 8 die kollisionsgefährdete Spannpratze 18 angeordnet ist.

Häufig wird eine von der Standard-Grundposition 30 abweichende Grundposition durch das Grundposition-Festlegungs-Modul 55 bestimmt, um ein bestimmtes Ausschleusen des Blechausschnittes oder eines Abfallteiles sicherzustellen. Als Kriterien zur Bestimmung der Grundpositionen berücksichtigt das Grundposition-Festlegungs-Modul 55 dabei vor allem den Hüllkreis und die Position des Flächenschwerpunktes des Blechausschnittes bzw. des Abfallteils. Der Hüllkreis bestimmt, ob der Blechausschnitt oder das Abfallteil durch die Matrizenöffnung 9 fallen können. Falls der Hüllkreis eines Blechausschnitts es zulassen würde, dass der Blechausschnitt durch die Matrizenöffnung 9 fällt, wird eine Grundposition gewählt, bei welcher sichergestellt ist, dass der Flächenschwerpunkt des Blechausschnittes beim abschließenden Freischneiden des Blechausschnittes über der Werkstückauflage 11 angeordnet ist.

Sollen mehrere, auch mehrere unterschiedliche Blechausschnitte durch die Bearbeitung eines Blechs 7 gewonnen werden, können sämtliche Blechausschnitte mittels des Blech-Belegungs-Moduls 53 zunächst auf dem Blech 7 positioniert und anschließend der Schneidprozess und das Ausschleusen für sämtliche Blechausschnitte gemeinsam festgelegt werden.

Basierend auf den getroffenen Festlegungen bei der Positionierung der Blechausschnitte und bei der Definition des Schneidprozesses sowie des Ausschleusens werden die Steuerbefehle 46 in der notwendigen Abfolge mittels eines NC-Text-Generators 56 erzeugt und abgespeichert. Zum Generieren der Steuerbefehle 46 für die Stellbewegungen in unterschiedliche Grundpositionen dient ein Steuerbefehl-Generator 57 des NC-Text-Generators 56.

Das fertige Bearbeitungsprogramm 47 kann an die Maschine 1 übermittelt und zum Herstellen der Blechausschnitte auf der Maschinensteuerung 45 abgearbeitet werden.

## Patentansprüche

1. Maschine zum Bearbeiten von Werkstücken, insbesondere von Blechen, mit einer Bearbeitungseinrichtung (6) sowie mit einem Hauptantrieb (17) und einem davon verschiedenen Zusatzantrieb, beide zur Erzeugung einer zur Werkstückbearbeitung vorgesehenen Relativbewegung der Bearbeitungseinrichtung (6) und eines Werkstückes (7), und mit einer numerischen Maschinensteuerung (45) zur Steuerung des Haupt- (17) und des Zusatzantriebes, wobei mittels des Hauptantriebes (17) die Bearbeitungseinrichtung (6) relativ zu dem Werkstück (7) und/oder das Werkstück (7) relativ zu der Bearbeitungseinrichtung (6) mit einer Hauptbewegung bewegbar ist und wobei mittels des Zusatzantriebes die Bearbeitungseinrichtung (6) relativ zu dem Werkstück (7) mit einer Zusatzbewegung bewegbar ist, **dadurch gekennzeichnet, dass** die Maschinensteuerung (45) derart programmiert ist, dass mittels eines für die Bearbeitungseinrichtung (6) vorgesehenen und von dem Hauptantrieb (17) verschiedenen Stellantriebs (24, 25) die Bearbeitungseinrichtung (6) innerhalb eines Verstellbereiches (26) in unterschiedliche Grundpositionen (30, 31, 32, 33, 37, 38) zugestellt wird, von denen ausgehend die Bearbeitungseinrichtung (6) mittels des Zusatzantriebes mit einer Zusatzbewegung bewegt wird.

2. Maschine nach Anspruch 1, **dadurch gekennzeichnet, dass** der Stellantrieb (24, 25) von dem Zusatzantrieb gebildet ist.

3. Maschine nach einem der vorhergehenden Ansprüche, **dadurch gekennzeichnet, dass** im Falle einer mittels des Stellantriebes (24, 25) erzeugten Stellbewegung der Bearbeitungseinrichtung (6) in eine der Grundpositionen (30, 31, 32, 33, 37, 38) innerhalb ihres Verstellbereiches (26) das Werkstück bzw. die Bearbeitungseinrichtung mittels des Hauptantriebes (17) derart bewegbar ist, dass eine Relativposition, in welcher die Bearbeitungseinrichtung (6) und das Werkstück (7) vor der Stellbewegung angeordnet sind, wiederhergestellt wird.

4. Maschine nach einem der vorhergehenden Ansprüche, **dadurch gekennzeichnet, dass** eine zur Werkstückbearbeitung vorgesehene Relativbewegung der Bearbeitungseinrichtung (6) und des Werkstückes (7) durch Überlagerung einer Hauptbewegung des Werkstückes (7) bzw. der Bearbeitungseinrichtung (6) und einer von einer eingestellten Grundposition (30, 31, 32, 33, 38) ausgehenden Zusatzbewegung der Bearbeitungseinrichtung (6) erzeugbar ist.

5. Maschine nach einem der vorhergehenden Ansprüche, **dadurch gekennzeichnet, dass** mittels der Zusatzbewegung der Bearbeitungseinrichtung (6) ein Bahnfolgefehler der mit einer Hauptbewegung bewegten Bearbeitungseinrichtung (6) bzw. des mit einer Hauptbewegung bewegten Werkstückes (7) ausgleichbar ist.

6. Maschine nach einem der vorhergehenden Ansprüche, **dadurch gekennzeichnet, dass** der Verstellbereich (26) der Bearbeitungseinrichtung (6) zumindest in einer Richtung wesentlich größer ist als der maximal zu erwartende Bahnfolgefehler der mit einer Hauptbewegung bewegten Bearbeitungseinrichtung (6) bzw. des mit einer Hauptbewegung bewegten Werkstückes (7), wobei der genannte Verstellbereich (26) beispielsweise das Achtfache des zu erwartenden Bahnfolgefehlers beträgt.

7. Maschine nach einem der vorhergehenden Ansprüche, **dadurch gekennzeichnet, dass** einer Grundposition (30, 31, 32, 33, 38) der Bearbeitungseinrichtung (6) innerhalb des Verstellbereiches (26) ein definierter Zusatzbewegungsbereich (39, 40, 41, 42, 43) zugeordnet ist, innerhalb dessen die Bearbeitungseinrichtung (6) bei Bedarf mit einer von der eingestellten Grundposition (30, 31, 32, 33, 38) ausgehenden Zusatzbewegung bewegbar ist.

8. Maschine nach einem der vorhergehenden Ansprüche, **dadurch gekennzeichnet, dass** unterschiedlichen Grundpositionen (30, 31, 32, 33, 37, 38) der Bearbeitungseinrichtung (6) unterschiedliche Positionen der Bearbeitungseinrichtung (6) gegenüber einer weiteren Funktionseinheit der Maschine zugeordnet sind, wobei die gegenseitige Lage der Bearbeitungseinrichtung (6) und der weiteren Funktionseinheit für die mittels der Bearbeitungseinrichtung (6) durchgeführte Werkstückbearbeitung relevant ist.

9. Maschine nach einem der vorhergehenden Ansprüche, **dadurch gekennzeichnet, dass** als Bearbeitungseinrichtung (6) ein Schneidstrahl, beispielsweise ein thermischer Schneidstrahl, vorzugsweise ein Laserschneidstrahl, vorgesehen ist.

10. Maschine nach einem der vorhergehenden Ansprüche, **dadurch gekennzeichnet, dass** als weitere Funktionseinheit der Maschine (1) eine Werkstückhalterung (18), beispielsweise eine Spannpratze, vorgesehen ist.

11. Maschine nach einem der vorhergehenden Ansprüche, **dadurch gekennzeichnet, dass** einem als Bearbeitungseinrichtung (6) vorgesehenen Schneidstrahl als weitere Funktionseinheit der Maschine (1) eine Schneidmatrize (8) zugeordnet ist, die an der von der Quelle des Schneidstrahls abliegenden Seite des zu bearbeitenden Werkstückes (7) angeordnet ist und die eine Matrizenöffnung (9) aufweist, in welche der Schneidstrahl bei der Werkstückbearbeitung eintaucht.

12. Maschine nach einem der vorhergehenden Ansprüche, **dadurch gekennzeichnet, dass** die Größe des Verstellbereiches (26) der Bearbeitungseinrichtung (6) auf die Größe einer Funktionseinheit der Maschine (1), beispielsweise auf die Größe einer Schneidmatrize (8), abgestimmt ist.

13. Maschine nach einem der vorhergehenden Ansprüche, **dadurch gekennzeichnet, dass** als weitere Funktionseinheit eine Werkstückauflage (11) vorgesehen ist, welche an die Schneidmatrize (8) angrenzt.

14. Maschine nach einem der vorhergehenden Ansprüche, **dadurch gekennzeichnet, dass** zur Bewegung der Bearbeitungseinrichtung (6) ein Bearbeitungskopf (5), an welchem die Bearbeitungseinrichtung (6) angeordnet ist, mittels des Zusatzantriebes und/oder mittels des Stellantriebes (24, 25) entlang einer maschinenseitigen Führung (23) bewegbar ist.

15. Maschine nach einem der vorhergehenden Ansprüche, **dadurch gekennzeichnet, dass** mittels der Bearbeitungseinrichtung (6) Werkstückausschnitte aus dem Werkstück (7) gewinnbar sind und dass eine eingestellte Grundposition (30, 31, 32, 33, 37, 38) der Bearbeitungseinrichtung einer bestimmten Lage eines Werkstückausschnittes innerhalb der Maschine (1) zugeordnet ist.

16. Maschine nach einem der vorhergehenden Ansprüche, **dadurch gekennzeichnet, dass** ein aus dem Werkstück (7) gewonnener Werkstückausschnitt je nach seiner Lage innerhalb der Maschine (1) auf unterschiedliche Weise aus der Maschine (1) ausschleusbar ist.

17. Verfahren zum maschinellen Bearbeiten von Werkstücken, insbesondere von Blechen, mittels einer Bearbeitungseinrichtung (6), wobei zur Werkstückbearbeitung die Bearbeitungseinrichtung (6) relativ zu einem Werkstück (7) und/oder das Werkstück (7) relativ zu der Bearbeitungseinrichtung (6) mittels eines Hauptantriebes (17) mit einer Hauptbewegung und bei Bedarf die Bearbeitungseinrichtung (6) relativ zu dem Werkstück (7) mittels eines Zusatzantriebes mit einer Zusatzbewegung bewegt wird, **dadurch gekennzeichnet, dass** die Bearbeitungseinrichtung (6) innerhalb eines Verstellbereiches (26) mittels eines von dem Hauptantrieb (17) verschiedenen Stellantriebes (24, 25) in unterschiedliche Grundpositionen (30, 31, 32, 33, 37, 38) zugestellt wird, wobei die Bearbeitungseinrichtung (6) ausgehend von der jeweils eingestellten Grundposition (30, 31, 32, 33, 37, 38) mit einer Zusatzbewegung bewegt wird.

18. Verfahren nach Anspruch 17, **dadurch gekennzeichnet, dass** bei einer mittels des Stellantriebes (24, 25) erzeugten Stellbewegung der Bearbeitungseinrichtung (6) in eine der Grundpositionen (30, 31, 32, 33, 37, 38) innerhalb ihres Verstellbereiches (26) das Werkstück (7) bzw. die Bearbeitungseinrichtung (6) mittels des Hauptantriebes (17) derart bewegt wird, dass eine Relativposition, in welcher die Bearbeitungseinrichtung (6) und das Werkstückes (7) vor der Stellbewegung angeordnet sind, wiederhergestellt wird.

19. Verfahren nach Anspruch 17 oder 18, **dadurch gekennzeichnet, dass** eine der Grundpositionen (30, 31, 32, 33, 37, 38) der Bearbeitungseinrichtung (6) als Standard-Grundposition (30) definiert wird.

20. Verfahren nach einem der Ansprüche 17 bis 19 **dadurch gekennzeichnet, dass** eine Hauptbewegung des Werkstücks (7) bzw. der Bearbeitungseinrichtung (6) und eine von einer eingestellten Grundposition (30, 31, 32, 33, 38) ausgehende Zusatzbewegung der Bearbeitungseinrichtung (6) einander überlagert werden.

21. Verfahren nach einem der Ansprüche 17 bis 20, **dadurch gekennzeichnet, dass** die Bearbeitungseinrichtung (6) ausgehend von einer eingestellten Grundposition (30, 31, 32, 33, 38) mit einer Zusatzbewegung bewegt wird, mittels derer ein Bahnfolgefehler der mit einer Hauptbewegung bewegten Bearbeitungseinrichtung (6) bzw. des mit einer Hauptbewegung bewegten Werkstückes (7) ausgeglichen wird.

22. Verfahren nach einem der Ansprüche 17 bis 21, **dadurch gekennzeichnet, dass** die Bearbeitungseinrichtung (6) abgestimmt auf einen an die Werkstückbearbeitung anschließenden Folgeschritt, wie beispielsweise ein Ausschleusen eines Werkstückausschnittes, in eine der Grundpositionen (30, 31, 32, 33, 37, 38) zugestellt wird.

23. Verfahren nach einem der Ansprüche 17 bis 22, **dadurch gekennzeichnet, dass** die Bearbeitungseinrichtung (6) in eine Grundposition (37) zugestellt wird und dass die Relativbewegung der Bearbeitungseinrichtung (6) und des Werkstückes (7) zur anschließenden Werkstückbearbeitung ausschließlich mittels einer Hauptbewegung des Werkstückes (7) erzeugt wird.

24. Verfahren nach einem der Ansprüche 17 bis 23, **dadurch gekennzeichnet, dass** die Bearbeitungseinrichtung (6) in eine Grundposition (37) am Rand ihres Verstellbereiches (26) zugestellt wird und dass die Relativbewegung der Bearbeitungseinrichtung (6) und des Werkstückes (7) zur anschließenden Werkstückbearbeitung ausschließlich mittels einer Hauptbewegung des Werkstückes (7) erzeugt wird.

25. Bearbeitungsprogramm zum Betreiben einer Maschine nach Anspruch 1 bis 16, **dadurch gekennzeichnet, dass** das Bearbeitungsprogramm (47) Steuerbefehle (46) für den Haupt- (17), den Zusatz- und den Stellantrieb (24, 25) umfasst, welche bewirken, dass ein Verfahren nach einem der Ansprüche 17 bis24 durchgeführt wird, wenn das Bearbeitungsprogramm (47) auf der numerischen Maschinensteuerung (45) abläuft.

26. Verfahren zum Erstellen eines Bearbeitungsprogramms nach Anspruch 25, **dadurch gekennzeichnet, dass** Steuerbefehle (46) für den Haupt- (17), den Zusatz- (24, 25), und den Stellantrieb (24, 25) erzeugt werden, welche bewirken, dass ein Verfahren nach einem der Ansprüche 17 bis 24 durchgeführt wird, wenn das Bearbeitungsprogramm (47) auf der numerischen Maschinensteuerung (45) abläuft.

27. Computerprogrammprodukt, welches Kodierungsmittel (51) aufweist, die zum Durchführen aller Schritte des Verfahrens zum Erstellen eines Bearbeitungsprogramms (47) nach Anspruch 26 angepasst sind, wenn das Computerprogrammprodukt (50) auf einer Datenverarbeitungsanlage (49) betrieben wird.

## Claims

1. Machine for processing workpieces, in particular metal sheets, having a processing device (6) and having a main drive (17) and an additional drive which is different therefrom, both for producing a relative movement of the processing device (6) and a workpiece (7), which relative movement is provided for processing workpieces, and having a numerical machine control (45) for controlling the main drive (17) and the additional drive, the processing device (6) being movable relative to the workpiece (7) and/or the workpiece (7) being movable relative to the processing device (6) with a main movement by means of the main drive (17) and the processing device (6) being movable relative to the workpiece (7) with an additional movement by means of the additional drive, **characterised in that** the machine control (45) is programmed in such a manner that the processing device (6) is positioned, by means of an actuating drive (24, 25) which is provided for the processing device (6) and which is different from the main drive (17), within an adjustment region (26) in various basic positions (30, 31, 32, 33, 37, 38), from which the processing device (6) is moved with an additional movement by means of the additional drive.

2. Machine according to claim 1, **characterised in that** the actuating drive (24, 25) is formed by the additional drive.

3. Machine according to either of the preceding claims, **characterised in that**, in the event of a positioning movement of the processing device (6) into one of the basic positions (30, 31, 32, 33, 37, 38) within the adjustment region (26) thereof, which positioning movement is brought about by means of the actuating drive (24, 25), the workpiece or the processing device can be moved by means of the main drive (17) in such a manner that a relative position in which the processing device (6) and the workpiece (7) are arranged prior to the positioning movement is reproduced.

4. Machine according to any one of the preceding claims, **characterised in that** a relative movement of the processing device (6) and the workpiece (7), which relative movement is provided for processing workpieces, can be produced by superimposing a main movement of the workpiece (7) or the processing device (6) and an additional movement of the processing device (6) from an adjusted basic position (30, 31, 32, 33, 38).

5. Machine according to any one of the preceding claims, **characterised in that** a sequential path error of the processing device (6) moved with a main movement or of the workpiece (7) moved with a main movement can be compensated for by means of the additional movement of the processing device (6).

6. Machine according to any one of the preceding claims, **characterised in that** the adjustment region (26) of the processing device (6) is significantly larger at least in one direction than the maximum sequential path error to be anticipated for the processing device (6) moved with a main movement or the workpiece (7) moved with a main movement, the said adjustment region (26) being, for example, eight times the sequential path error to be anticipated.

7. Machine according to any one of the preceding claims, **characterised in that** there is associated with a basic position (30, 31, 32, 33, 38) of the processing device (6) within the adjustment region (26) a defined additional movement region (39, 40, 41, 42, 43), within which the processing device (6) can be moved as necessary with an additional movement from the adjusted basic position (30, 31, 32, 33, 38).

8. Machine according to any one of the preceding claims, **characterised in that** there are associated with various basic positions (30, 31, 32, 33, 37, 38) of the processing device (6) various positions of the processing device (6) with respect to an additional functional unit of the machine, the mutual position of the processing device (6) and the additional functional unit being relevant for the workpiece processing operation carried out by means of the processing device (6).

9. Machine according to any one of the preceding claims, **characterised in that** there is provided, as a processing device (6), a cutting beam, for example, a thermal cutting beam, preferably a laser cutting beam.

10. Machine according to any one of the preceding claims, **characterised in that** there is provided, as an additional functional unit of the machine (1), a workpiece retention member (18), for example, a clamping claw.

11. Machine according to any one of the preceding claims, **characterised in that** there is associated, as an additional functional unit of the machine (1), with a cutting beam which is provided as a processing device (6), a cutting die (8) which is arranged at the side of the workpiece (7) to be processed remote from the source of the cutting beam and which has a die opening (9) in which the cutting beam is introduced when the workpiece is processed.

12. Machine according to any one of the preceding claims, **characterised in that** the size of the adjustment region (26) of the processing device (6) is adapted to the size of a functional unit of the machine (1), for example, to the size of a cutting die (8).

13. Machine according to any one of the preceding claims, **characterised in that** there is provided as an additional functional unit a workpiece support (11) which adjoins the cutting die (8).

14. Machine according to any one of the preceding claims, **characterised in that**, in order to move the processing device (6), a processing head (5) on which the processing device (6) is arranged can be moved along a machine-side guide (23) by means of the additional drive and/or by means of the actuating drive (24, 25).

15. Machine according to any one of the preceding claims, **characterised in that** workpiece cutouts can be obtained from the workpiece (7) by means of the processing device (6) and **in that** an adjusted basic position (30, 31, 32, 33, 37, 38) of the processing device is associated with a specific position of a workpiece cutout within the machine (1).

16. Machine according to any one of the preceding claims, **characterised in that** a workpiece cutout obtained from the workpiece (7) can be discharged from the machine (1) in different manners depending on the position thereof in the machine (1).

17. Method for the mechanical processing of workpieces, in particular metal sheets, by means of a processing device (6), the processing device (6) being moved relative to a workpiece (7) and/or the workpiece (7) being moved relative to the processing device (6) by means of a main drive (17) with a main movement for processing workpieces, and the processing device (6) being moved relative to the workpiece (7) as necessary with an additional movement by means of an additional drive, **characterised in that** the processing device (6) is positioned within a positioning region (26) in various basic positions (30, 31, 32, 33, 37, 38) by means of an actuating drive (24, 25) which is different from the main drive (17), the processing device (6) being moved with an additional movement starting from the respective adjusted basic position (30, 31, 32, 33, 37, 38).

18. Method according to claim 17, **characterised in that**, in the event of a positioning movement of the processing device (6) brought about by means of the actuating drive (24, 25) into one of the basic positions (30, 31, 32, 33, 37, 38) within the adjustment region (26) thereof, the workpiece (7) or the processing device (6) is moved by means of the main drive (17) in such a manner that a relative position in which the processing device (6) and the workpiece (7) are arranged prior to the positioning movement is reproduced.

19. Method according to claim 17 or claim 18, **characterised in that** one of the basic positions (30, 31, 32, 33, 37, 38) of the processing device (6) is defined as a standard basic position (30).

20. Method according to any one of claims 17 to 19, **characterised in that** a main movement of the workpiece (7) or the processing device (6) and an additional movement of the processing device (6) starting from an adjusted basic position (30, 31, 32, 33, 38) are superimposed on each other.

21. Method according to any one of claims 17 to 20, **characterised in that** the processing device (6), starting from an adjusted basic position (30, 31, 32, 33, 38), is moved with an additional movement, by means of which a sequential path error of the processing device (6) moved with a main movement or the workpiece (7) moved with a main movement is compensated for.

22. Method according to any one of claims 17 to 21, **characterised in that** the processing device (6), is moved into one of the basic positions (30, 31, 32, 33, 37, 38) in accordance with a sequential step following the workpiece processing operation, such as, for example, discharge of a workpiece cutout.

23. Method according to any one of claims 17 to 22, **characterised in that** the processing device (6) is positioned in a basic position (37) and **in that** the relative movement of the processing device (6) and the workpiece (7) for subsequent workpiece processing is produced exclusively by means of a main movement of the workpiece (7).

24. Method according to any one of claims 17 to 23, **characterised in that** the processing device (6) is positioned in a basic position (37) at the edge of the adjustment region (26) thereof, and **in that** the relative movement of the processing device (6) and the workpiece (7) for the subsequent workpiece processing is produced exclusively by means of a main movement of the workpiece (7).

25. Processing programme for operating a machine according to claim 1 to claim 16, **characterised in that** the processing programme (47) comprises control commands (46) for the main drive (17), additional drive and actuating drive (24, 25) which have the effect that a method in accordance with any one of claims 17 to 24 is carried out when the processing programme (47) runs on the numerical machine control (45).

26. Method for generating a processing programme according to claim 25, **characterised in that** control commands (46) are produced for the main drive (17), additional drive (24, 25) and actuating drive (24, 25) which have the effect that a method in accordance with any one of claims 17 to 24 is carried out when the processing programme (47) runs on the numerical machine control (45).

27. Computer programme product which has encoding means (51) which are suitable for carrying out all the steps of the method for generating a processing programme (47) according to claim 26 when the computer programme product (50) is operated on a data-processing system (49).

## Revendications

1. Machine pour l'usinage de pièces, en particulier de tôles, avec un dispositif d'usinage (6) ainsi qu'avec un entraînement principal (17) et un entraînement auxiliaire différent de l'entraînement principal, destinés tous deux à produire un mouvement relatif, prévu pour l'usinage de pièces, entre le dispositif d'usinage (6) et une pièce (7), et avec une commande de machine numérique (45) pour commander l'entraînement principal (17) et l'entraînement auxiliaire, sachant qu'au moyen de l'entraînement principal (17), le dispositif d'usinage (6) peut être déplacé par rapport à la pièce (7) et/ou la pièce (7) par rapport au dispositif d'usinage (6) en un mouvement principal, et qu'au moyen de l'entraînement auxiliaire, le dispositif d'usinage (6) peut être déplacé par rapport à la pièce (7) en un mouvement auxiliaire, **caractérisée en ce que** la commande de machine (45) est programmée de telle sorte que, au moyen d'un entraînement de réglage (24, 25) prévu pour le dispositif d'usinage (6) et différent de l'entraînement principal (17), le dispositif d'usinage (6) est approché à l'intérieur d'une plage de réglage (26) dans différentes positions de base (30, 31, 32, 33, 37, 38), à partir desquelles le dispositif d'usinage (6) est, au moyen de l'entraînement auxiliaire, déplacé en un mouvement auxiliaire.

2. Machine selon la revendication 1, **caractérisée en ce que** l'entraînement de réglage (24, 25) est formé par l'entraînement auxiliaire.

3. Machine selon l'une des revendications précédentes, **caractérisée en ce que**, dans le cas d'un mouvement de réglage, produit au moyen de l'entraînement de réglage (24, 25), du dispositif d'usinage (6) dans une des positions de base (30, 31, 32, 33, 37, 38) à l'intérieur de sa plage de réglage (26), la pièce ou le dispositif d'usinage peut, au moyen de l'entraînement principal (17), être déplacé(e) de telle sorte qu'une position relative, dans laquelle le dispositif d'usinage (6) et la pièce (7) sont disposés avant le mouvement de réglage, est rétablie.

4. Machine selon l'une des revendications précédentes, **caractérisée en ce qu'**un mouvement relatif, prévu pour l'usinage de pièces, du dispositif d'usinage (6) et de la pièce (7) peut être produit par la superposition d'un mouvement principal de la pièce (7) ou du dispositif d'usinage (6), et d'un mouvement auxiliaire du dispositif d'usinage (6) partant d'une position de base réglée (30, 31, 32, 33, 38).

5. Machine selon l'une des revendications précédentes, **caractérisée en ce que**, au moyen du mouvement auxiliaire du dispositif d'usinage (6), on peut compenser une erreur de suivi de trajectoire du dispositif d'usinage (6) déplacé en un mouvement principal ou de la pièce (7) déplacée en un mouvement principal.

6. Machine selon l'une des revendications précédentes, **caractérisée en ce que** la plage de réglage (26) du dispositif d'usinage (6) est, au moins dans une direction, nettement supérieure à l'erreur maximale attendue de suivi de trajectoire du dispositif d'usinage (6) déplacé en un mouvement principal ou de la pièce (7) déplacée en un mouvement principal, sachant que ladite plage de réglage (26) est par exemple égale à huit fois l'erreur attendue de suivi de trajectoire.

7. Machine selon l'une des revendications précédentes, **caractérisée en ce qu'**une plage définie de mouvement auxiliaire (39, 40, 41, 42, 43), à l'intérieur de laquelle le dispositif d'usinage (6) peut être en cas de besoin déplacé en un mouvement auxiliaire partant de la position de base réglée (30, 31, 32, 33, 38), est associée à une position de base (30, 31, 32, 33, 38) du dispositif d'usinage (6) à l'intérieur de la plage de réglage (26).

8. Machine selon l'une des revendications précédentes, **caractérisée en ce que** différentes positions du dispositif d'usinage (6) par rapport à une autre unité fonctionnelle de la machine sont associées à différentes positions de base (30, 31, 32, 33, 37, 38) du dispositif d'usinage (6), sachant que la position relative du dispositif d'usinage (6) et de l'autre unité fonctionnelle est importante pour l'usinage de pièce effectué au moyen du dispositif d'usinage (6).

9. Machine selon l'une des revendications précédentes, **caractérisée en ce qu'**il est prévu comme dispositif d'usinage (6) un faisceau de coupe, par exemple un faisceau de coupe thermique, de préférence un faisceau de coupe laser.

10. Machine selon l'une des revendications précédentes, **caractérisée en ce qu'**il est prévu comme autre unité fonctionnelle de la machine (1) un porte-pièce (18), par exemple une griffe de serrage.

11. Machine selon l'une des revendications précédentes, **caractérisée en ce qu'**une matrice de coupe (8) est associée comme autre unité fonctionnelle de la machine (1) à un faisceau de coupe prévu comme dispositif d'usinage (6), matrice qui est disposée sur le côté de la pièce (7) à usiner qui est éloigné de la source du faisceau de coupe, et qui présente une ouverture de matrice (9) dans laquelle pénètre le faisceau de coupe lors de l'usinage de la pièce.

12. Machine selon l'une des revendications précédentes, **caractérisée en ce que** la taille de la plage de réglage (26) du dispositif d'usinage (6) est adaptée à la taille d'une unité fonctionnelle de la machine (1), par exemple à la taille d'une matrice de coupe (8).

13. Machine selon l'une des revendications précédentes, **caractérisée en ce qu'**il est prévu comme autre unité fonctionnelle un support de pièce (11) qui est limitrophe de la matrice de coupe (8).

14. Machine selon l'une des revendications précédentes, **caractérisée en ce que**, pour déplacer le dispositif d'usinage (6), une tête d'usinage (5), sur laquelle est disposé le dispositif d'usinage (6), peut être déplacée au moyen de l'entraînement auxiliaire et/ou au moyen de l'entraînement de réglage (24, 25) le long d'un guide (23) solidaire de la machine.

15. Machine selon l'une des revendications précédentes, **caractérisée en ce qu'**au moyen du dispositif d'usinage (6), on peut obtenir à partir de la pièce (7) des flans de pièce, et **en ce qu'**une position de base réglée (30, 31, 32, 33, 37, 38) du dispositif d'usinage est associée à une position déterminée d'un flan de pièce à l'intérieur de la machine (1).

16. Machine selon l'une des revendications précédentes, **caractérisée en ce qu'**un flan de pièce obtenu à partir de la pièce (7) peut, en fonction de sa position à l'intérieur de la machine (1), être évacué de la machine (1) de différentes manières.

17. Procédé pour l'usinage mécanique de pièces, en particulier de tôles, au moyen d'un dispositif d'usinage (6), sachant que, pour l'usinage de pièces, le dispositif d'usinage (6) est déplacé par rapport à une pièce (7) et/ou la pièce (7) par rapport au dispositif d'usinage (6) en un mouvement principal au moyen d'un entraînement principal (17), et qu'en cas de besoin, le dispositif d'usinage (6) est déplacé par rapport à la pièce (7) en un mouvement auxiliaire au moyen d'un entraînement auxiliaire, **caractérisé en ce que** le dispositif d'usinage (6) est, au moyen d'un entraînement de réglage (24, 25) différent de l'entraînement principal (17), approché à l'intérieur d'une plage de réglage (26) dans différentes positions de base (30, 31, 32, 33, 37, 38), sachant que le dispositif d'usinage (6) est déplacé en un mouvement auxiliaire à partir de la position de base respectivement réglée (30, 31, 32, 33, 37, 38).

18. Procédé selon la revendication 17, **caractérisé en ce que**, lors d'un mouvement de réglage, produit au moyen de l'entraînement de réglage (24, 25), du dispositif d'usinage (6) dans une des positions de base (30, 31, 32, 33, 37, 38) à l'intérieur de sa plage de réglage (26), la pièce (7) ou le dispositif d'usinage (6) est, au moyen de l'entraînement principal (17), déplacé(e) de telle sorte qu'une position relative, dans laquelle le dispositif d'usinage (6) et la pièce (7) sont disposés avant le mouvement de réglage, est rétablie.

19. Procédé selon la revendication 17 ou 18, **caractérisé en ce qu'**une des positions de base (30, 31, 32, 33, 37, 38) du dispositif d'usinage (6) est définie comme position de base standard (30).

20. Procédé selon l'une des revendications 17 à 19, **caractérisé en ce qu'**un mouvement principal de la pièce (7) ou du dispositif d'usinage (6), et un mouvement auxiliaire du dispositif d'usinage (6) partant d'une position de base réglée (30, 31, 32, 33, 38), sont mutuellement superposés.

21. Procédé selon l'une des revendications 17 à 20, **caractérisé en ce que** le dispositif d'usinage (6) est, en partant d'une position de base réglée (30, 31, 32, 33, 38), déplacé en un mouvement auxiliaire au moyen duquel est compensée une erreur de suivi de trajectoire du dispositif d'usinage (6) déplacé en un mouvement principal ou de la pièce (7) déplacée en un mouvement principal.

22. Procédé selon l'une des revendications 17 à 21, **caractérisé en ce que** le dispositif d'usinage (6) est approché dans une des positions de base (30, 31, 32, 33, 37, 38) d'une manière adaptée à une étape consécutive faisant suite à l'usinage de la pièce, comme par exemple l'évacuation d'un flan de pièce.

23. Procédé selon l'une des revendications 17 à 22, **caractérisé en ce que** le dispositif d'usinage (6) est approché dans une position de base (37), et **en ce que** le mouvement relatif du dispositif d'usinage (6) et de la pièce (7) pour l'usinage consécutif de la pièce est produit exclusivement au moyen d'un mouvement principal de la pièce (7).

24. Procédé selon l'une des revendications 17 à 23, **caractérisé en ce que** le dispositif d'usinage (6) est approché dans une position de base (37) sur le bord de sa plage de réglage (26), et **en ce que** le mouvement relatif du dispositif d'usinage (6) et de la pièce (7) pour l'usinage consécutif de la pièce est produit exclusivement au moyen d'un mouvement principal de la pièce (7).

25. Programme d'usinage pour faire fonctionner une machine selon l'une des revendications 1 à 16, **caractérisé en ce que** le programme d'usinage (47) comprend des ordres de commande (46) pour l'entraînement principal (17), l'entraînement auxiliaire et l'entraînement de réglage (24, 25), ordres qui ont pour effet l'exécution d'un procédé selon l'une des revendications 17 à 24 lorsque le programme d'usinage (47) se déroule sur la commande de machine numérique (45).

26. Procédé pour générer un programme d'usinage selon la revendication 25, **caractérisé en ce que** des ordres de commande (46) sont produits pour l'entraînement principal (17), l'entraînement auxiliaire (24, 25) et l'entraînement de réglage (24, 25), ordres qui ont pour effet l'exécution d'un procédé selon l'une des revendications 17 à 24 lorsque le programme d'usinage (47) se déroule sur la commande de machine numérique (45).

27. Produit-programme informatique, qui présente des moyens de codage (51) qui sont adaptés pour exécuter toutes les étapes du procédé pour générer un programme d'usinage (47) selon la revendication 26 lorsqu'on fait fonctionner le produit-programme informatique (50) sur une installation de traitement de données (49).
